Europäisches Patentamt

European Patent Office

Office européen des brevets

(11) Publication number: **0 406 017 A1**

# EUROPEAN PATENT APPLICATION

(21) Application number: 90307174.4

(51) Int. Cl.⁵: **H04N 7/167**

(22) Date of filing: 29.06.90

(30) Priority: 29.06.89 GB 8914880

(43) Date of publication of application:
02.01.91 Bulletin 91/01

(84) Designated Contracting States:
AT BE CH DE DK ES FR GB GR IT LI LU NL SE

(71) Applicant: INDEPENDENT BROADCASTING
AUTHORITY
70 Brompton Road
London SW3 1EY(GB)

(72) Inventor: **Mason, Arthur Gordon,**
**1, The Avenue,**
**Andover, Hants SO21 2QA(GB)**

(74) Representative: **Crawford, Andrew Birkby et al**
**A.A. THORNTON & CO. Northumberland**
**House 303-306 High Holbornorn**
**London WC1V 7LE(GB)**

(54) Video scrambling in the frequency domain.

(57) A video signal is scrambled by conversion into the frequency domain, alteration of the transform, then reconversion into the time domain. One scrambling technique involves a pseudo-random permutation of the frequency location of samples of the phase characteristic of the transform. Another scrambling technique involves addition and/or subtraction of a series of pseudo-random numbers to group of samples of the phase characteristic of the transform. Descrambling involves carrying out in the frequency domain the reverse alteration process. Fast Fourier transform circuits may be used, together with a phase alteration means, or an all-pass digital filter implementation is possible.

*Fig.5.*

# VIDEO SCRAMBLING IN THE FREQUENCY DOMAIN

The present invention relates to the scrambling of video signals in the frequency domain.

A great deal of work has been done on the scrambling of television video signals. Typical methods range from randomly inverting TV lines, moving TV lines backwards and forwards into the line blanking period, and cutting and rotation of segments of the TV line. Re-ordering of TV lines is also possible but the re-ordering of samples within a TV line causes picture defects to appear in the descrambled signal because of transient effects on the samples in the transmission channel. All of these scrambling methods may be characterised as time domain scrambling methods.

Most time domain scrambling methods exhibit some form of defect in the descrambled waveform. These defects usually show up as a flickering effect on the descrambled picture.

Attempts have been made to reduce the effects of scrambling artefacts but these have usually required a compromise to be made in the security of the scrambling method.

The present invention provides a method for scrambling television signals in the frequency domain, together with a method for descrambling such signals in the frequency domain and apparatus for putting these methods into practice.

According to a preferred embodiment of the invention a secure scrambling method is provided which has the advantage that it is transparent to linear distortions in the transmission channel.

The method of the present invention begins by taking the Fourier transform of the video waveform, $V(t)$ i.e., transforming the signal from the time domain into the frequency domain. The video signal can be represented mathematically in the frequency domain, as follows:

$$M(f) \exp \{ j\emptyset(f) \}$$

The signal in the frequency domain may be considered as consisting of two parts, its magnitude (as a function of frequency), $M(f)$, and by its phase (as a function of frequency), $\emptyset(f)$. The magnitude information, $M(f)$, may be extracted from the Fourier transform by taking its modules, the phase information, $\emptyset(f)$, may be extracted by taking the argument.

There are two degrees of freedom available to the user for the purpose of video scrambling in the frequency domain: the magnitude characteristic $M(f)$ may be altered or the phase characteristic $\emptyset(f)$ may be altered. Clearly, alteration of a mathematical combination of the two is also possible.

In the presently preferred embodiments of the invention only the phase characteristic is altered leaving the magnitude characteristic untouched.

Features and advantages of the present invention will appear from the following description of preferred embodiments thereof, given by way of example, and illustrated by the accompanying drawings, in which:

Figure 1 illustrates the steps in a first preferred scrambling method, and the corresponding descrambling steps;

Figure 2 illustrates diagrammatically the structure of a scrambler implementing the first preferred scrambling method;

Figure 3 illustrates the steps in a second preferred scrambling method, and the corresponding descrambling steps;

Figure 4 illustrates diagrammatically the structure of a scrambler implementing the second preferred scrambling method;

Figure 5 shows in diagrammatic form a descrambler arrangement according to a multiplication -type embodiment of the second preferred scrambling method;

Figure 6 shows, in the z-domain the pole zero constraints on an all-pass (unit magnitude) response digital filter, used in implementing the second preferred scrambling scheme; and

Figure 7 shows, in block diagrammatic form, a second order all-pass filter section meeting the constraints of Figure 6.

There are described below two methods of scrambling a video signal by randomising the phase characteristic of its Fourier transform, each exhibiting slightly different properties.

The first method is phase permutation. The argument of the fast Fourier transform of the video signal may be considered as n samples each one at a different frequency, $f_n$, and each with its own phase, $\emptyset_n$. The samples in the phase/frequency characteristic are re-ordered, e.g. so that the sample 1 with phase $\emptyset_1$ is at frequency $f_8$ instead of $f_1$, sample 2 with phase $\emptyset_2$ is at $f_4$ instead of $f_2$ etc. The re-ordered samples are then recombined with the magnitude information and subjected to an inverse Fourier transform to produce the scrambled signal. The re-ordering of samples is preferably carried out in a pseudo-random manner.

Descrambling is carried out in the reverse manner, i.e. the scrambled signal is subjected to a Fourier transformation, the argument is taken, the samples are re-ordered in the reverse manner to that performed during scrambling, and then the samples are recombined with the magnitude information and are subjected to an inverse Fourier transformation to reproduce the original signal.

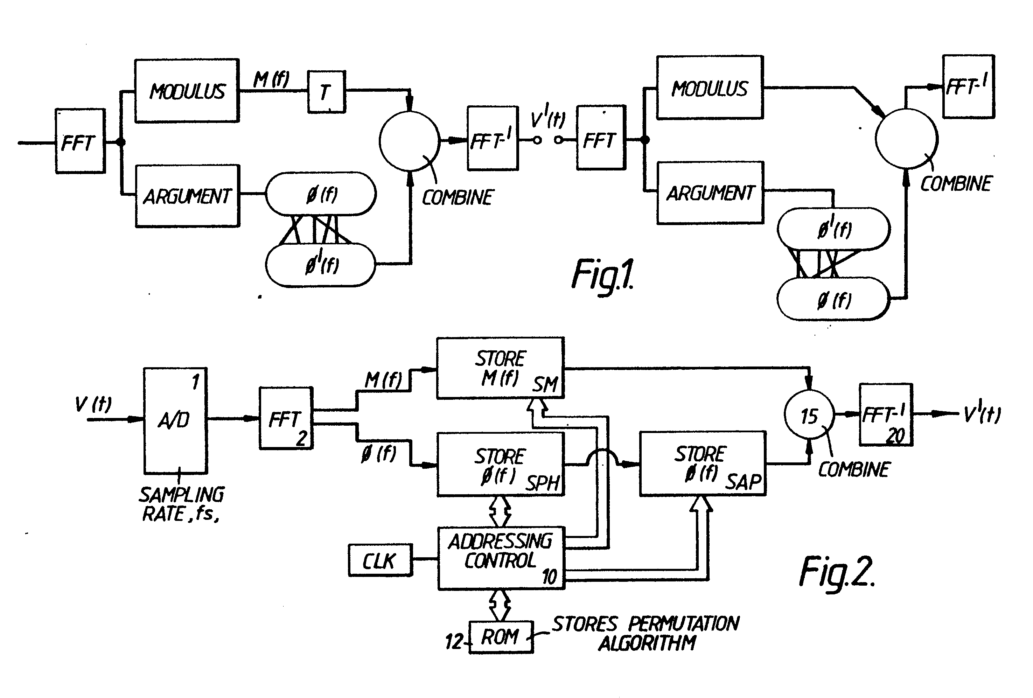

The steps of this first method are illustrated in Fig. 1. A video signal scrambler for carrying out this first method is shown diagrammatically in Fig. 2.

In the video signal scrambler of Fig. 2 the input video signal is first sampled by an analogue-to-digital converter 1 at a sampling rate appropriate to capture all of the information in the signal without aliassing (ie at sampling rate $f_s > 2f_m$, where $f_m$ = highest frequency present in video signal). The sampling rate is also chosen bearing in mind the capabilities of the Fast Fourier Transform circuit 2 and the capacity of the memories SM, SPM and SPP.

At present a preferred embodiment of the Fig. 2 scrambler involves a one-dimensional Fourier transformation, with the FFT circuit working on one whole video line at a time, and the luminance component is processed in parallel with the chrominance component. One video line of luminance typically gives rise to 512 or 1024 samples.

The sampled signal is fed to the Fast Fourier Transform circuit 2 (which may be a commercially available FFT integrated circuit) and the transform information may be output therefrom in the form of separate magnitude characteristic data and phase characteristic data. The magnitude characteristic samples are loaded into store SM and the phase characteristic samples are loaded into store SPH under the control of addressing control unit 10.

The phase permutation is carried out by the addressing control unit 10 by reading out the phase characteristic samples from store SPH in a first order (ie in address sequence) and writing the samples into store SPP in a different order; the change of addresses being specified by the content of a ROM 12. When the phase samples are read out (in address sequence) from store SPP their order will have been changed, which here amounts to a phase permutation since the combination unit 15 treats the successively received permuted phase samples as if they were ordered by frequency.

Combination unit 15 recombines the permuted phase samples with the magnitude samples and outputs the resultant phase permuted Fourier transform to the inverse Fast Fourier Transform circuit 20 (which, again, may be a commercially available IC). The addressing control 10 ensures that the timing of read out of the magnitude samples from store SM is appropriate in relation to the timing of read out of the permuted phase samples from store SPP.

The construction of a descrambler for this first method of scrambling mirrors the construction of the scrambler.

It will be appreciated that the above-described first preferred scrambling method may be implemented using a wide variety of scrambler (and corresponding descrambler) constructions. For example, instead of the Fast Fourier Transform unit directly outputing two signals, one being the magnitude characteristic and the other being the phase characteristic of the Fourier transform, separate hardware may be used to derive the modulus and argument of the transform. Equally look-up tables could be used.

As a further example, the detailed implementation of the phase permutation need not use two memories, an addressing control and a ROM storing the permutation algorithm; instead a single memory could be used (with the samples of the phase data being written into the store in a first address order and being read out from the store in a different order. Where the samples are written into sequential addresses the read out addresses may be generated by a pseudo random number generator), or the phase permutation may be "hard-wired" (ie a permanent connection would exist between a given output address of the first sample store and a given input address of the permuted sample store). Furthermore, as indicated above the phase permutation at the scrambler need not be fixed but could be arranged to vary in a manner known, or transmitted, to the descrambler.

This first method of scrambling is a permutation cipher in the frequency domain. The number of possible orderings of the n samples is n factorial, (n!), which can be a very large number. In practice the number of different orderings used in scrambling the video signal may be limited by the particular structure of the apparatus used to implement the scrambling method.

The scrambling method is likely to be dispersive of video signals in the frequency domain. Thus when a signal scrambled according to this method is subjected to channel distortions the effect of the distortion on the eventual descrambled signal will appear as low level noise. This is by way of contrast to the situation with time domain scrambling where distortions cause flicker effects in the descrambled image which are irritating to the viewer.

The second preferred scrambling method according to the present invention also involves first taking the Fourier transform of the video signal. Once in the frequency domain scrambling is achieved by taking the argument of the samples and adding a different random number to each sample value of the phase characteristic.

This scrambling method may be implemented by treating the phase characteristic as a plaintext message which is to be enciphered by a stream cipher using random numbers generated by a pseudo-random number generator. As is usual when using a stream cipher the two number streams are added together in order to produce the ciphertext output. The ciphertext output is recombined with the magnitude information and then subjected to an inverse Fourier transformation so as to produce the scrambled signal for transmission. The process is reversed at the receiver, using a random number generator synchronised with that used at the scrambler to generate the same stream of random numbers for subtraction from the scrambled signal in the frequency domain, so as to reproduce the original video signal.

Obviously, an alternative way in which this scrambling method could be implemented is that the random numbers could be subtracted at the scrambler and added at the descrambler. Equally, the scrambler could add to the sampler random numbers having some positive and some negative values and the descrambler could then add random numbers having the same magnitude but opposite polarity. Furthermore, when working in modulus 2, adding and subtraction are equivalent processes.

This second scrambling method has several advantages. A stream cipher is very secure and so the scrambled signal will be very secure. Also, this scrambling method does not render the scrambled signal more sensitive to linear channel distortion. Indeed it may be seen from the mathematical analysis given below that this scrambling method is "transparent" insofar as linear channel distortions are concerned.

The phase additive process involved in this scrambling scheme amounts to simply multiplying the video signal in the frequency domain by a complex number having unit magnitude as shown below.

Step 1 $M(f) \cdot \exp \{ j\emptyset(f) \}$
Video signal in frequency domain

Step 2 $M(f) \cdot \exp \{ j [\emptyset(f) + R(f)] \}$
· Scrambled signal, random-no. R(f) added to phase.
$M(f) \cdot \exp \{ j\emptyset(f) \} \cdot \exp \{ jR(f) \}$
An equivalent expression to Step 2. The scrambling amounts to multiplication by $\exp \{ jR(f) \}$.

Similarly descrambling, the subtraction of a random number from the phase characteristic, amounts to a multiplication of the video signal in the frequency domain by $\exp \{ -jR(f) \}$.

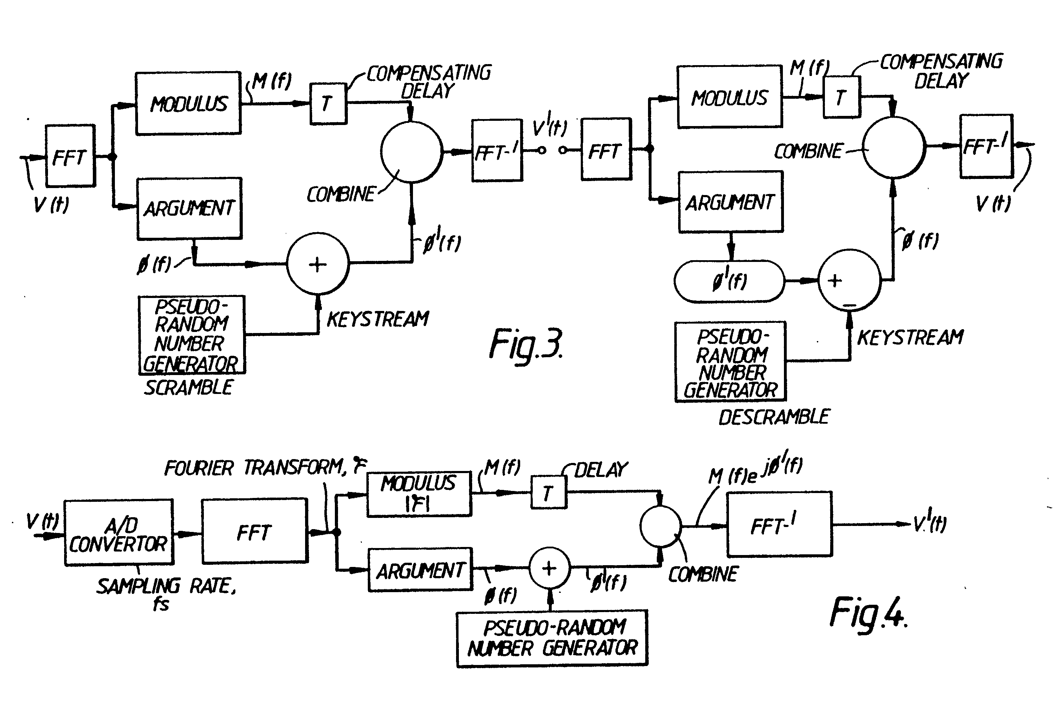

Thus, as an alternative to the structure of Fig 4 the output of the FFT circuit could be fed to a multiplier, where the samples of the signal are multiplied by $\exp \{ jR(f) \}$ before being passed to the inverse FFT circuit. Similarly a multiplier using the multiplier $\exp \{ - jR(f) \}$ would be used in the descrambler.

The effect of the distortion process may be represented mathematically as multiplication by $D(f) \cdot \exp \{ j\theta f) \}$. Since the scrambling and descrambling processes are linear operations they are commutative about a linear channel distortion process. Hence the scrambling-descrambling process does not add any extra distortion in a linear distortion channel. This can be shown mathematically by comparing the process of transmission of a video signal in a linear distortion channel when scrambled and when unscrambled.

Transmission in Distortion Channel - No Scrambling

Step 1 $M(f) \cdot \exp \{ j\emptyset(f) \}$
Video signal in frequency domain
Step 2 $M(f) \cdot \exp \{ j\emptyset(f) \} \cdot D(f) \cdot \exp ( j\theta(f) \}$
$= M(f) \cdot D(f) \cdot \exp \{ j [\emptyset(f) + \theta(f)] \}$
Video signal after distortion in transmission channel

Transmission in Distortion Channel - Scrambling

Step 1 $M(f) \cdot \exp \{ j\emptyset(f) \}$
Video signal in frequency domain
Step 2 $M(f) \cdot \exp \{ j\emptyset(f) \} \cdot \exp \{ jR(f) \}$
Scrambled video signal
Step 3 $M(f) \cdot \exp \{ j\emptyset(f) \} \cdot \exp \{ jR(f) \} \cdot D(f) \cdot \exp \{ j\theta(f) \}$
Scrambled video signal after distortion in transmission channel.
Step 4 $M(f) \cdot \exp \{ j\emptyset(f) \} \cdot \exp \{ jR(f) \} \cdot D(f) \cdot \exp \{ j\theta(f) \} \cdot \exp \{ -jR(f) \}$
$= M(f) \cdot D(f) \cdot \exp \{ j [\emptyset(f) + \theta(f)] \}$
Descrambled signal after distortion. This expression equals that at Step 2 in the "No Scrambling" case, thus it may be seen that the scrambling process and the linear channel distortion are independent.

As has been stated above this scrambling process corresponds to multiplication in the frequency domain by exp { R(f) }. By the theory of Fourier transforms this amounts in the time domain to a convolution of the signal with a random stream. Hence this scrambling process is the same as convolving the picture information with random noise.

| TIME DOMAIN | SIGNAL | FREQUENCY DOMAIN |
|---|---|---|
| m(t) | Video | M(f).exp {j$\emptyset$(f) } |
| r(t) | Random Stream | exp { jR(f) } |
| $\int$m(t)r(t+T)dT (convolution) | Scrambled Video | M(f).exp{ j$\emptyset$(f) }. exp (jR(f)} (multiplication) |

Clearly the scrambled signal will be unintelligible because the scrambling process converts the video signal into a noise-like signal.

The phase stream cipher has been shown here to be transparent to linear distortions. It is thought that non-linear distortions will be dispersed by the convolution process, possibly being converted into a noise like signal.

The phase stream cipher is thought to have useful concealment properties for FM threshold spikes. Threshold spikes occur in an FM channel when it is operated at low signal strength. These threshold spikes are visually much worse than noise on the picture information. The threshold spikes may be thought of as a unit impulse. The unit impulse, after passing through the descrambler, will exhibit the effects of phase dispersal. The effect will be to smear the impulse and reduce its amplitude. It is thought that the effect of the descrambler is to convert the sharp impulse into a small packet of noise.

The steps of this second preferred scrambling method are illustrated in Fig. 3. A video signal scrambler for carrying out this second method is shown diagrammatically in Fig. 4.

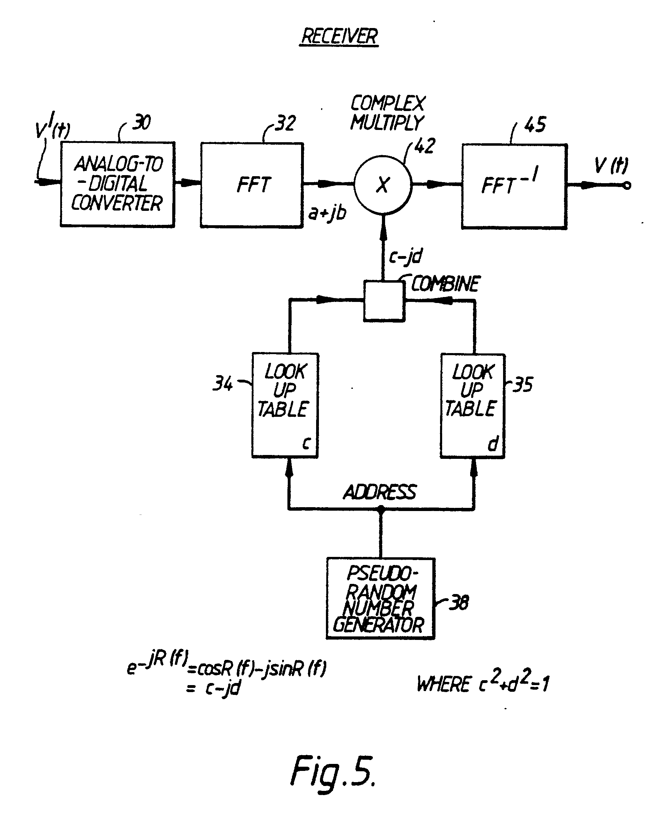

Figure 5 shows a block diagram of a descrambler for the "multiplication" embodiment of the second preferred method. The signal $V'(t)$ is received and converted to digital form by the analog-to-digital converter 30. The scrambled signal is then converted into the frequency domain by the FFT circuit 32 and the resultant signal may be represented by the complex numbers (a+jb). As described above, this number (a+jb) must be multiplied by exp (-jR(f)) to descramble the signal. One method of implementing this is shown in figure 5. The function exp (-jR(f))=cos R(f)-j sin R(f) can be described as a complex number (c-jd) where c and d are random values but have the property $c^2 + d^2 = 1$. Two look-up tables 34, 35 store pre-calculated values of the possible pairs of values c and d. These pairs of values are then randomly selected by the pseudo random number generator 38, whose output is used to address the look-up tables 34, 35 storing the c and d values. These values are combined in unit 40 to generate a signal representing (c-jd). The complex member (c-jd) is multiplied in unit 42 with the incoming signal (a+jb), for example using a commercially available IC, and this process descrambles the signal in the frequency domain. The final process is to take the inverse FFT (using circuit 45) to convert the descrambled signal back into the time domain.

It is to be understood that, although the above description assumes the use of an FFT circuit-inverse FFT circuit pair both at the transmitter and at the receiver, it is possible to configure the apparatus so that the transmitter and receiver only use forward Fourier transformations.

For example, in the "multiplication" embodiment of the second preferred method described above the processing chain may be represented as: V(t)→ FFT → multiply by $e^{jR(f)}$→ , FFT$^{-1}$ → , V$^1$(t)
Scrambler

V$^1$(t)→ FFT → multiply by $e^{-jR(f)}$ →FFT$^{-1}$ → V(t)
Descrambler

However one could equally well implement the method, as follows: V(t)→FFT→ multiply by $e^{jR(f)}$-→FFT→V$^1$(t) *, Complex Conjugate of V$^1$(t).
Scrambler

V$^1$(t)* →FFT→ multiply by $e^{jR(f)}$→FFT→V(t)
Descrambler

Similarly one could use all inverse FFT circuits.

It may be seen that the scrambler and descrambler could be identical devices in this implementations.

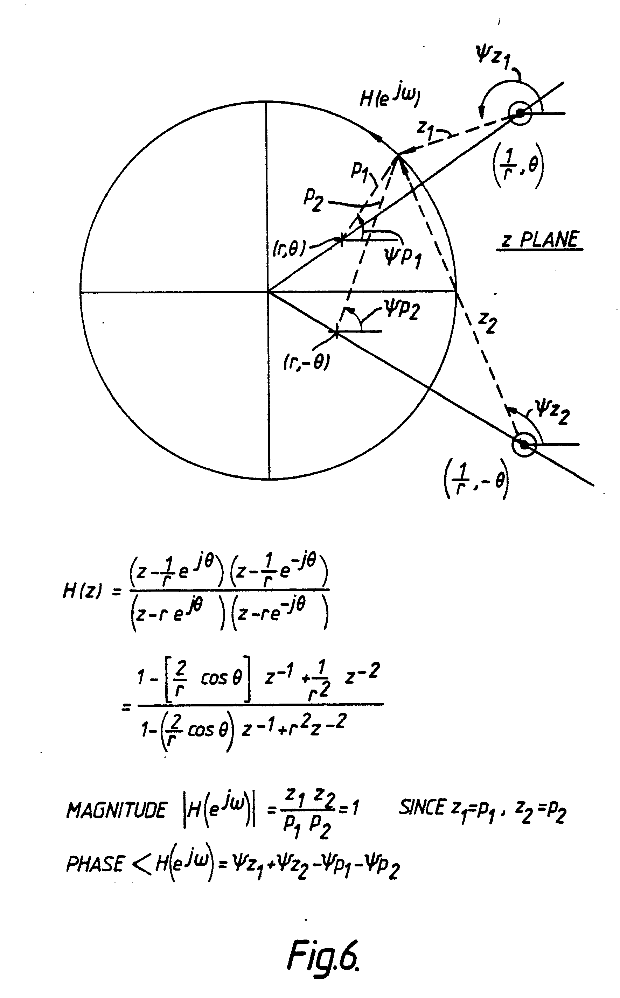

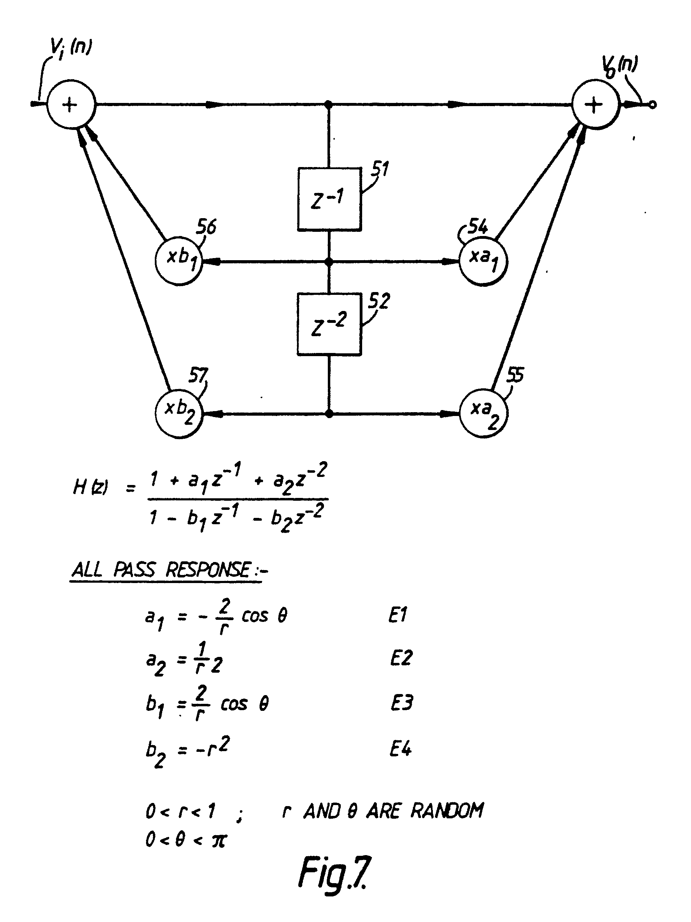

As described above, the phase stream cipher can be implemented using fast Fourier transform circuits, and this is the preferred method. However, it is also possible to use an all-pass digital filter implementation and this is shown in Figures 6 and 7.

The pole zero constraints on an all-pass (unit magnitude) response are shown in the z-domain in Figure 6. Figure 6 shows a second order all-pass filter. The all-pass response, ie no alteration of magnitude of the various frequency components, is produced when the poles are at a radius r inside the unit circle and the zeros are at the radius 1/r outside the unit circle in the z-domain. The second order poles and zeros must also have conjugate pairs at $\theta$ and $-\theta$. The scrambler will vary the values of r and $\theta$ in a random, but bounded, manner. Figure 7 shows a block diagram of the second order all-pass filter section to produce the scrambling. The coefficient values of H(z) as functions of r and $\theta$ are shown.

In the Fig. 7 filter the $z^{-1}$ unit 51 is a 1-sample delay line and the $z^{-2}$ unit 52 is a 2-sample delay line. Multiplier units 54, 55, 56 and 57 apply variable multiplier coefficients $a_1$, $a_2$, $b_1$, $b_2$, which coefficients are adapted to vary from one input sample to the next in a pseudo-random manner according to the equations E1-E4 shown in Fig. 7 by means of varying the parameters r and $\theta$ pseudo randomly.

Preferably an all-pass filter according to the invention, such as that of Fig. 7, would be implemented as a digital filter so as to enable the coefficients $a_1$, $a_2$, $b_1$, $b_2$, to be varied easily.

In order to descramble, the receiver must divide by H(z). This may be achieved by multiplying with a filter that has the transfer function 1/H(z). This reciprocal function is obtained by simply interchanging the poles for zeros and vice versa. However, there is a problem with implementing a filter of this form because it puts the poles outside the unit circle. A filter with poles outside the unit circle is unstable . Hence, it is preferred to implement the scrambler or descrambler as a digital filter at one end only of the transmission chain.

Preferably the all-pass digital filter implementation would be used at the receiver (descrambler) side of the transmission chain, so as to enable the receiver unit to have a relatively simple construction, and the transmitter (scrambler) side would use some other implementation such as the FFT circuit embodiment discussed above. In such a case there would be a constraint upon the phase alteration which could be performed by the scrambler because of the need to perform an alteration whose inverse could be performed at the descrambler (since the phase alteration operation of the digital filter descrambler is limited by the need for an all-pass response). Also precautions must be taken so as to ensure that the pseudo-random phase variation and inverse thereof, respectively performed by the scrambler and descrambler, are properly synchronised with each other.

In one embodiment of a scrambler-descrambler system using an all-pass digital filter implementation at the descrambler, set of values for the multiplier coefficients ($a_1$, $a_2$, $b_1$, $b_2$,) to be used in the digital filter are stored in look up tables at the descrambler. These sets of values are read out using as an address a sequence of two pseudo-random numbers, one being the value of r (between 0 and 1), the other being the value of $\theta$ (between 0 and $\pi$ ) generated by two pseudo-random number generators. At the scrambler, which uses FFT circuits and, for example,the second scrambler method,a further set of look up tables stores information on sets of values to be added to the transform phase characteristic, each set of values Vph corresponding to a set of multiplier coefficients ($a_1$, $a_2$, $b_1$, $b_2$,),Vmc, of the descrambler digital filter so that the scrambler responds to Vph in the inverse manner to the descrambler's response to Vmc. The scrambler look up tables are addressed using the sequence of two pseudo-random numbers generated by two pseudo-random number generators. These pseudo random number generators are structured and syncronised so as to produce the same address values as the r and $\theta$ pseudo random number generators at the descrambler.

The scrambling processes of the present invention turns the video waveform into a noise like signal. This provides excellent scrambling but causes the resulting signal to have a large dynamic range in amplitude. In some cases this increased dynamic range may cause problems and a method needs to be used to "tame" the amplitude spikes that can occur in the scrambled waveform. One way of "taming" the signal would be to reduce the magnitude of the phase shift added to certain frequencies in the second preferred scrambling method. This "taming" process can be performed quite easily at both transmitter and receiver by attenuating the magnitude of the random values added to certain frequencies in the Fourier domain.

"Taming" may only be needed in special circumstances as the very large spikes occur only infrequently and their clipping does not produce significant picture impairments. In practice it is the samples representing low frequencies which are likely to have a limit placed on the size of the random numbers added thereto.

## Claims

1. A method for scrambling video signals, comprising the steps of:
transforming the video signal from the time domain to the frequency domain;
altering the transform of the video signal so as to randomise the video signal; and transforming the altered video signal transform from the frequency domain to the time domain.

2. A method according to claim 1, wherein the altering step comprises altering the phase characteristic of the video signal transform.

3. A method according to claim 2, and further comprising the steps of producing a set of samples each sample representing the phase of the video signal transform at a particular frequency, performing a permutation of the frequency location of the samples in the set such that the set of permuted samples represents a modified phase characteristic, and using the modified phase characteristic to produce the altered video signal transform.

4. A method according to claim 3, wherein the permutation of the frequency location of the sample values in the set is performed pseudo-randomly.

5. A method according to claim 3 or 4, wherein the permutation step is performed using specially conditioned addressing of at least one store into which the sample values of the set are written.

6. A method according to claim 2, and further comprising the steps of producing a set of samples, each sample value representing the phase of the video signal transform at a particular frequency, adding a series of numbers to the sample values, said series including numbers taking positive and/or negative values, such that the set of augmented samples represents a modified phase characteristic, and using the modified phase characteristic to produce the altered video signal transform.

7. A method according to claim 6, wherein the adding step comprises adding a series of pseudo random numbers to the set of sample values.

8. A method according to claim 6 or 7, wherein the adding step comprises, for sample values at selected frequencies, reducing the magnitude of the numbers added to those samples whereby to reduce amplitude spikes in the scrambled signal.

9. A method according to claim 2, and further comprising the step of multiplying the video signal transform by a signal $e^{jR(f)}$ having unit magnitude.

10. A method according to claim 9, wherein the multiplying step comprises:
storing pairs of values (c, d) in storage means, said pairs of numbers (c, d) satisfying the condition $c^2 + d^2 = 1$; pseudo-randomly generating a number for use in addressing the storage means so as to read out a pair of values (c, d);
generating a signal c + jd from the read out pair of values; and
multiplying the video signal transform by the c + jd signal.

11. A method according to claim 9 or 10, and further comprising the step of reducing the magnitude of the R(f) component of the multiplying signal $e^{jR(f)}$ at selected frequencies whereby to reduce amplitude spikes in the scrambled signal.

12. A method according to claim 2, wherein the transforming steps and the altering step are performed using an all-pass digital filter.

13. Apparatus for scrambling a video signal, comprising:
means for transforming the video signal from the time domain to the frequency domain;
means for altering the transform of the video signal so as to randomise the video signal;
means for transforming the altered video signal transform from the frequency domain to the time domain.

14. Apparatus according to claim 13, wherein the altering means comprises means for altering the phase characteristic of the video signal transform.

15. Apparatus according to claim 14, wherein the altering means comprises means for producing a set of samples, each sample representing the phase of the video signal transform at a particular frequency, means for permuting the frequency location of the sample values in the set such that the set of permuted samples represents a modified phase characteristic, and means for using the modified phase characteristic to produce the altered video signal transform.

16. Apparatus according to claim 15, wherein the permutation means comprises a pseudo random number generator.

17. Apparatus according to claim 15 or 16, wherein the permutation means comprises at least one store arranged to have the sample values of the set written therein and addressing means adapted to vary the addressing of the at least one store.

18. Apparatus according to claim 14, wherein the altering means comprises means for producing a set of samples, each sample representing the phase of the video signal transform at a particular frequency, means for adding a series of numbers to the sample values, the series including numbers taking positive and/or negative values, such that the set of augmented sample values represents a modified phase characteristic, and means for using the modified phase characteristic to produce the altered video signal transform.

19. Apparatus according to claim 18, wherein the altering means further comprises a pseudo random number generator the output of which serves as an input to the adding means.

20. Apparatus according to claim 18 or 19, wherein the adding means is adapted, for sample values at selected frequencies, to reduce the magnitude of the number added to the respective sample value.

21. Apparatus according to claim 14, wherein the altering means comprises means for multiplying the video signal transform by a signal $e^{jR(f)}$ having unit magnitude.

22. Apparatus according to claim 21 wherein the altering means comprises:

storage means for storing pairs of numbers (c, d) satisfying the condition $c^2 + d^2 = 1$;

a pseudo random number generator the output of which is used for addressing the storage means;

means for processing each pair of values c, d read out from the storage means so as to produce a signal c + jd; and

means for multiplying the video signal transform by said c + jd signal.

23. Apparatus according to claim 21 or 22, wherein the multiplying means is adapted to use a multiplying signal $e^{jR(f)}$ having a R(f) component of reduced magnitude at selected frequencies.

24. Apparatus according to claim 14, wherein the transforming means and the altering means are comprised by an all-pass digital filter.

25. Apparatus according to claim 14, wherein the means for transforming the video signal between the time domain and the frequency domain are fast Fourier transform circuits.

26. A method for descrambling video signals which have been randomised by alteration in the frequency domain, comprising the steps of:

transforming the scrambled video signal from the time domain to the frequency domain;

altering the transform of the scrambled video signal so as to reverse said randomisation process; and

transforming the altered transform from the frequency domain to the time domain.

27. A method according to claim 26, wherein the altering step comprises altering the phase characteristic of the scrambled video signal transform.

28. A method according to claim 27, and further comprising the steps of producing a set of samples, each sample representing the phase of the scrambled video signal transform at a particular frequency, performing a permutation of the frequency location of the samples in the set such that the set of permuted samples represents a modified phase characteristic, and using the modified phase characteristic to produce the altered transform.

29. A method according to claim 28, wherein the permutation of the frequency location of the sample values in the set is performed pseudo-randomly.

30. A method according to claim 28 or 29, wherein the permutation step is performed using specially conditioned addressing of at least one store into which the sample values of the set are written.

31. A method according to claim 27, and further comprising the steps of producing a set of samples, each sample value representing the phase of the video signal transform at a particular frequency, subtracting a series of numbers from the sample values, said series including numbers having positive and/or negative values, such that the set of reduced samples represents a modified phase characteristic, and using the modified phase characteristic to produce the altered video signal transform.

32. A method according to claim 31, wherein the subtracting step comprises subtracting a series of pseudo random numbers from the set of sample values.

33. A method according to claim 31 or 32, wherein the subtracting step comprises, for sample values at selected frequencies, reducing the magnitude of the numbers subtracted from those samples whereby to reduce amplitude spikes in the scrambled signal.

34. A method according to claim 24, and further comprising the step of multiplying the video signal transform by a signal $e^{-jR(f)}$.

35. A method according to claim 34, wherein the multiplying step comprises:

storing pairs of values (c, d) in storage means, said pairs of numbers (c, d) satisfying the condition $c^2 + d^2 = 1$; pseudo-randomly generating a number for use in addressing the storage means so as to read out a pair of values (c, d);

generating a signal c - jd from the read out pair of values; and

multiplying the video signal transform by the c - jd signal.

36. A method according to claim 34 or 35 and further comprising the step of reducing the amplitude of the R(f) component of the multiplying signal $e^{-jR(f)}$ at selected frequencies whereby to reduce amplitude spikes in the scrambled signal.

37. A method according to claim 27, wherein the transforming steps and the altering step are performed using an all-pass digital filter.

38. Apparatus for descrambling a video signal which has been randomised in the frequency domain , the apparatus comprising:

means for transforming the scrambled video signal from the time domain to the frequency domain;

means for altering the transform of the scrambled video signal so as to reverse the randomisation process; and

means for transforming the altered video signal transform from the frequency domain to the time domain.

39. Apparatus according to claim 38, wherein the altering means comprises means for altering the phase characteristic of the scrambled video signal transform.

40. Apparatus according to claim 39, wherein the altering means comprises means for producing a set of samples, each sample representing the phase of the scrambled video signal transform at a particular frequency, means for permuting the frequency location of the sample values in the set such that the set of permuted samples represents a modified phase characteristic, and means for using the modified phase characteristic to produce the altered transform.

41. Apparatus according to claim 40, wherein the permutation means comprises a pseudo random number generator.

42. Apparatus according to claim 39 or 40, wherein the permutation means comprises at least one store arranged to have the sample values of the set written therein and addressing means adapted to vary the addressing of the at least one store.

43. Apparatus according to claim 39, wherein the altering means comprises means for producing a set of samples, each sample representing the phase of the video signal transform at a particular frequency, means for subtracting a series of numbers from the sample values, the series including numbers taking positive and/or negative values, such that the set of sample values represents a modified phase characteristic, and means for using the modified phase characteristic to produce the altered video signal transform.

44. Apparatus according to claim 43, wherein the altering means further comprises a pseudo random number generator the output of which serves as an input to the subtracting means.

45. Apparatus according to claim 43 or 44, wherein the subtracting means is adapted, for sample values at selected frequencies, to reduce the magnitude of the number subtracted from the respective sample value.

46. Apparatus according to claim 39, wherein the altering means comprises means for multiplying the video signal transform by a signal $e^{-jR(f)}$ having unit magnitude.

47. Apparatus according to claim 46, wherein the altering means comprises:

storage means for storing pairs of numbers (c, d) satisfying the condition $c^2 + d^2 = 1$;

a pseudo random number generator the output of which is used for addressing the storage means;

means for processing each pair of values c, d read out from the storage means so as to produce a signal c - jd; and

means for multiplying the video signal transform by said c - jd signal.

48. Apparatus according to claim 46 or 47, wherein the multiplying means is adapted to use a multiplying signal $e^{-jR(f)}$ having a R(f) component of reduced magnitude at selected frequencies.

49. Apparatus according to claim 39, wherein the transforming means and the altering means are comprised by an all-pass digital filter.

50. Apparatus according to claim 39, wherein the means for transforming the video signal between the time domain and the frequency domain are fast Fourier transform circuits.

51. Method according to any one of claims 1 to 11, or 26 to 36, or apparatus according to any one of claims 13 to 23, 25, 38 to 48 or 50, wherein the transformations from the time domain to the frequency domain and from the frequency domain to the time domain involve only forward Fourier transforms, or involve only inverse Fourier transforms, whereby to enable the same alteration process to be performed on a scrambled video signal transform being descrambled as on a video signal transform being scrambled.

Fig.1.

Fig.2.

EP 0 406 017 A1

Fig.3.

Fig.4.

_RECEIVER_

$$e^{-jR(f)} = \cos R(f) - j\sin R(f)$$
$$= c - jd$$

WHERE $c^2 + d^2 = 1$

_Fig.5._

$$H(z) = \frac{\left(z - \frac{1}{r}e^{j\theta}\right)\left(z - \frac{1}{r}e^{-j\theta}\right)}{\left(z - r\,e^{j\theta}\right)\left(z - re^{-j\theta}\right)}$$

$$= \frac{1 - \left[\frac{2}{r}\cos\theta\right]z^{-1} + \frac{1}{r^2}\,z^{-2}}{1 - \left(\frac{2}{r}\cos\theta\right)z^{-1} + r^2 z^{-2}}$$

MAGNITUDE $\left|H\left(e^{j\omega}\right)\right| = \dfrac{z_1\,z_2}{p_1\,p_2} = 1$     SINCE $z_1 = p_1$, $z_2 = p_2$

PHASE $< H\left(e^{j\omega}\right) = \psi z_1 + \psi z_2 - \psi p_1 - \psi p_2$

# Fig.6.

$V_i(n)$

$V_o(n)$

51
$Z^{-1}$

56
$xb_1$

54
$xa_1$

52
$Z^{-2}$

57
$xb_2$

55
$xa_2$

$$H(z) = \frac{1 + a_1 z^{-1} + a_2 z^{-2}}{1 - b_1 z^{-1} - b_2 z^{-2}}$$

ALL PASS RESPONSE :-

$$a_1 = -\frac{2}{r} \cos \theta \qquad\qquad E1$$

$$a_2 = \frac{1}{r^2} \qquad\qquad E2$$

$$b_1 = \frac{2}{r} \cos \theta \qquad\qquad E3$$

$$b_2 = -r^2 \qquad\qquad E4$$

$0 < r < 1 \quad ; \quad r$ AND $\theta$ ARE RANDOM

$0 < \theta < \pi$

Fig.7.

14

**European Patent Office**

**EUROPEAN SEARCH REPORT**

Application Number

EP 90 30 7174

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 484 544 (H.R. WALKER) <br> * Abstract * | 1,2,13, 14,26, 27,38, 39 | H 04 N 7/167 |
| A | CONFERENCE PROCEEDINGS OF THE MILITARY MICROWAVES'84, London, 24th - 26th October 1984, pages 50-54; G.J. PROUDLER: "Bulk encryption for wideband applications" <br> * Page 50, lines 15-35 * | 1-5,13- 17,26- 30,38- 42 | |
| A | WO-A-8 102 234 (PATELHOLD) <br> * Page 5, line 9 - page 8, line 8 * | 1,2,6, 13,14, 18,26, 27,31, 38,39, 43 | |
| A | ALTA FREQUENZA, vol. LVII, no. 2, February-March 1988, pages 133-138; E. DEL RE et al.: "A new speech signal scrambling method for mobile radio applications" <br> * Whole document * | 1-51 | TECHNICAL FIELDS SEARCHED (Int. Cl.5) <br><br> H 04 N <br> H 04 K |
| A | IEEE JOURNAL ON SELECTED AREAS IN COMMUN., vol. 7, no. 4, May 1989, pages 540-547; A. MATSUNAGA et al.: "An analog speech scrambling system using the FFT technique with high-level security" | | |

The present search report has been drawn up for all claims

| Place of search | Date of completion of the search | Examiner |
|---|---|---|
| THE HAGUE | 26-09-1990 | GREVE M.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)